# EUROPEAN PATENT SPECIFICATION

(11) **EP 0 601 953 B1**
(45) Date of publication and mention of the grant of the patent: **14.05.1997**
(21) Application number: 93500150.3
(22) Date of filing: 03.11.1993
(51) Int. Cl.: C08C 19/02

(54) **Process of hydrogenation in solution of the double bonds of polymers of conjugated dienes, and hydrogenated block copolymer produced**
Verfahren zur Hydrierung in Lösung der Doppelbindungen von Polymeren aus conjugiesten Dienen, und hergestellte hydrierte Blockcopolymere
Procédé pour hydrogéner en solution les double liaisons de polymères de diènes conjugués et des coplymères en block hydrogénés ainsi préparés

(30) Priority: 03.11.1992 ES 9202219
(43) Date of publication of application: 15.06.1994
(73) Proprietor: REPSOL QUIMICA S.A., E-28046 Madrid (ES)
(72) Inventor: Parellada Ferrer, Maria Dolores, E-28820 Coslada (Madrid) (ES); Barrio Calle, Juan Antonio, E-28007 Madrid (ES)
(74) Representative: Garcia Cabrerizo, Francisco

(56) References cited:
- FR-A- 2 539 745

## Description

The present invention relates to a process of hydrogenation of the double bonds of the diene units of polymers in the presence of new homogeneous titanium catalysts which are highly soluble in organic solvents and are endowed with a high activity even in the absence of reducing agents. More specifically, the present invention relates to the use of hydrogenation catalysts based on titanium compounds of the type Cp₂Ti(PhOR)₂, where Cp represents a cyclopentadienyl group, Ph a phenyl group, and OR is an alkoxide group containing 1 to 4 carbon atoms and preferentially occupying the 3 or 4 position of the aromatic ring; or on titanium compounds of the type Cp₂TiR₂, where R is a -CH₂PPh₂ group, and to the process of hydrogenation of double bonds of polymers and copolymers of conjugated dienes under mild reaction conditions.

Numerous catalysts are known for the hydrogenation of compounds containing unsaturated double bonds, catalysts which may be classified into two groups:
(1) Heterogeneous catalysts, generally consisting of a metal such as Ni, Pd, Pt, Ru, etc. deposited on a support such as carbon, silica, alumina, calcium carbonate, etc.; and
(2) homogeneous catalysts such as (a) Ziegler catalysts consisting of a combination of an organic salt of Ni, Co, Fe, Cr, etc. and a reducing agent such as the organoaluminum compounds and the like, and (b) organometallic compounds of Ru, Rh, Ti, La, etc.

Heterogeneous catalysts are widely used in industry, but compared with the homogeneous catalysts they are less active and hence, in order to carry out the desired hydrogenation with these heterogeneous catalysts, large quantities of catalyst are needed and the reaction must be carried out at relatively high pressures and temperatures. The homogeneous catalysts are generally more active; a small amount of catalyst is sufficient, and the hydrogenation reaction can be carried out under milder pressure and temperature conditions. Nevertheless, homogeneous catalysts have the disadvantage that their stability is not sufficient and the separation of the catalyst or its decomposition products from the hydrogenated products can be complicated and costly.

Polymers of conjugated dienes such as 1,3-butadiene and isoprene and the copolymers of these dienes with vinylaromatic monomers, e.g. with styrene, are widely used in industry as elastomers. These polymers contain double bonds in their chain, which permit their vulcanization, but whose presence causes a low resistance to aging and oxidation. Some block copolymers of conjugated dienes and vinylaromatic hydrocarbons are used without vulcanization as thermoplastic elastomers, as transparent impact-resistant resins, or as modifiers or compatibilizers of polystyrene and polyolefin resins. However these copolymers have a low resistance to aging and oxidation by atmospheric oxygen and by ozone, due to the presence of double bonds in their chain. Hence the use of these copolymers in applications requiring exposure to the external environment is limited. The resistance to oxidation by oxygen and ozone, and, in general, the resistance to aging, may be considerably improved by hydrogenating these polymers to obtain total or partial saturation of the double bonds. Numerous processes have been proposed for the hydrogenation of polymers which contain olefinic double bonds. Two types of processes are generally involved: those which use the aforementioned supported heterogeneous catalysts, and those using homogeneous catalysts of the Ziegler type or organometallic compounds of rhodium and titanium.

In the processes using supported heterogeneous catalysts, the polymer to be hydrogenated is first dissolved in a suitable solvent and then contacted with hydrogen in the presence of the heterogeneous catalyst. The contact of the reactants with the catalyst is difficult due to the relatively high viscosity of the polymer solution, to steric hindrances of the polymer chain, and to the high adsorption of the polymer which, once hydrogenated, tends to remain on the surface of the catalyst, interfering with the access to the active centers of the nonhydrogenated polymer. Hence, to achieve complete hydrogenation of the double bonds, large quantities of catalyst and severe reaction conditions are required, which usually cause decomposition and gelification of the polymer. Furthermore, in the hydrogenation of copolymers of conjugated dienes with vinylaromatic hydrocarbons the aromatic nuclei are also hydrogenated, and it is difficult to effect a selective hydrogenation of the double bonds of the polydiene units. Likewise, the physical separation of the catalyst from the solution of hydrogenated polymer is extremely difficult, and in some cases a complete elimination is impossible due to the strong adsorption of the polymer on the heterogeneous catalyst.

In processes using Ziegler-type catalytic systems the reaction takes place substantially in a homogeneous medium, and hence the hydrogenation may be carried out under mild pressure and temperature conditions. Moreover, by adequately selecting the conditions of hydrogenation it is possible to selectively hydrogenate the double bonds of the chains of the copolymers of conjugated dienes and vinylaromatic hydrocarbons without hydrogenating the aromatic rings. Nevertheless the elimination of the catalyst residues from the reaction products -- which is absolutely necessary because these residues have an unfavorable effect on the stability of the hydrogenated polymers -- is a complicated and costly step. Other processes using other homogeneous catalysts, e.g. the rhodiumn compounds described in U.S. Patent No. 3,898,208 and in the patent JP 01.289,805 have the disadvantage of the high cost of the rhodium catalysts.

It is known that hydrogenation catalysts in which one of the components is a derivative of cyclopentadienyltitanium (U.S. Patent No. 4,501,857) are used -- necessarily in the presence of organolithium compounds -- for the hydrogenation of the olefinic double bonds of the polymers of conjugated dienes. U.S. Patent No. 5,039,755 describes the hydrogenation of polymers that had been synthetized by means of an organolithium compound and which have been completed by the addition of hydrogen, the presence of the lithium hydride formed in the final reaction being necessary in this case. The examples of both patents use the compound Cp₂TiCl₂, which is very sparingly soluble in organic solvents and which, because of the presence of chlorides, may cause corrosion of the materials.

Likewise, in British Patent Application No. 2,159,819 A it is indicated that species of the Cp₂TiR₂ type (R = alkylaryl groups) are catalysts capable of selectively hydrogenating the double bonds of polymers and copolymers of conjugated dienes, without requiring the presence of an organolithium compound.

Finally, European Patent No. 434,469 A2 describes the use of an extraordinarly complex catalytic system, comprising a bis-cyclopentadienyltitanium compound in combination with an organometallic compound of aluminum or magnesium and alkaline metals in the presence of alkoxides of alkaline metals and polar compounds of the ether, ketone, sulfoxide, etc. type. Said catalytic system is capable of hydrogenating the double bonds of polymers and copolymers of conjugated dienes.

To obtain more economical hydrogenation processes, present-day industry feels the need of having homogeneous catalysts avaliable which are more effective than those currently known, which are stable, simple and active in concentrations that are sufficiently low so as to be able to avoid the costly step of elimination of catalyst residues from the hydrogenated polymer.

On our part, we have discovered that, surprisingly, titanium compounds of the type Cp₂Ti(PhOR)₂, wherein Cp is a cyclopentadienyl group, Ph a phenyl group and OR an alkoxide group containing between 1 and 4 carbon atoms, and titanium compounds of the type Cp₂TiR₂ wherein R is a -CH₂PPh₂ group, are homogeneous catalysts, very soluble in inert organic solvents, which, consequently, are easily handled in solution form and are very active in the hydrogenation. The catalysts of the type Cp₂Ti(PhOR)₂ are highly stable catalysts, also in solution, and retain their activity even several months after their preparation. These catalysts are capable of selectively hydrogenating the double bonds of the diene units in polymers and copolymers of conjugated dienes with vinylaromatic monomers having number-averaged molecular weights of between approximately 500 and 1,000,000, and in particular, of random copolymers and block copolymers of styrene-butadiene or isoprene which contain at least one styrene block and one polybutadiene or polyisoprene block.

Because of the high activity of these catalysts the consumption of catalyst per unit weight of hydrogenated polymer will be very low, which is reflected in a very reduced cost of catalyst. On the other hand, at the low catalyst concentrations that are usually required in accordance with the invention, it is not necessary to eliminate the catalyst residues from the hydrogenated polymer, since they do not have an unfavorable influence on the properties of said polymers. As indicated above, this fact is advantageous from the industrial point of view, particularly in the hydrogenation of polymers and copolymers of conjugated dienes, since it permits a substantial simplification of the process.

Specific examples of catalysts useful within the framnework of the invention include bis-(4-methoxyphenyl)-bis-(η⁵-cyclopentadienyl)titanium, bis-(3-methoxyphenyl)-bis-(η⁵-cyclopentadienyl)titanium, bis-(4-ethoxyphenyl)-bis-(η⁵-cyclopentadienyl)titanium, bis-(3-ethoxyphenyl)-bis-(η⁵-cyclopentadienyl)titanium, etc., and bis-(diphenylphosphinomethylene)-bis-(η⁵-cyclopentadienyl)titanium.

The hydrogenation catalysts in accordance with the present invention may be synthetized according to the methods described by H.C. Beachell and S.A. Butter, Inorg. Chem. 4, 1133 (1965), and M. Etiene, R. Choukon et al., Nouveau Journal Chimie 8, 531-34 (1984).

These catalysts are capable of selectively hydrogenating the double bonds of diene units in polymers or copolymers of conjugated dienes having average molecular weights of between approximately 500 and 1,000,000, and particularly copolymers of a conjugated diene such as 1,3-butadiene or isoprene with vinylaromatic compounds such as styrene or α-methylstyrene. These copolymers include the statistical copolymers in which the comonomers are distributed at random along the polymer chain, the insertion copolymers, and the pure or gradual block copolymers.

The block copolymers are especially interesting since some of them are thermoplastic elastomers useful from the industrial point of view. Such block copolymers consist of a) at least one polymer block A formed by polymerization of an aromatic hydrocarbon with a vinylic substituent, such as styrene or α-methylstyrene, and b) ar least one polymer block B formed by polymerization of conjugated dienes, such as 1,3-butadiene or isoprene. These block copolymers include copolymers of the linear, branched and radial type, and star block copolymers obtained by coupling linear block copolymers with a coupling agent. The block copolymers preferentially used in the present invention are those containing between 10 and 90% by weight of vinylaromatic hydrocarbon. Particularly preferred are those copolymers whose content of 1,2-vinyl bonds in the conjugated diene units is comprised between approximately 25 and 75%.

When block copolymers of these characteristics are hydrogenated, the polydiene blocks are converted into polyolefinic blocks in such a way that the copolymers behave like thermoplastic elastomers of great industrial value.

The polymers of conjugated dienes and copolymers of conjugated dienes which may be hydrogenated in accordance with the present invention can be obtained by known polymerization methods such as anionic polymerization, cationic polymerization, coordination polymerization, radical polymerization., etc., by solution, emulsion or bulk processes. Anionic polymerization is of particular interest for producing polymers and copolymers that may be hydrogenated in accordance with the present invention. Among the initiators that may be used, preference is given to organolithium compounds, particularly butyllithium. The synthesis of diene polymers may also be advantageously carried out with combinations of barium, magnesium or aluminum compounds, e.g. barium alkoxides or alkyl phosphates, alkylmagnesium compounds and trialkylaluminum compounds (Spanish Patent No. P-9001799).

Living polymers containing active lithium at the end of the polymer chain may also be hydrogenated, although the presence of living polymer is not essential within the framework of the present invention. Living polymers are produced by anionic polymerization using an organolithium compound as initiator. The catalysts used in the preparation of living polymers are hydrocarbon compounds which contain at least one lithium atom in their molecule. Typical examples are n-butyllithium, sec.-butyllithium, etc.

In accordance with a preferred method within the framework of the present invention, the hydrogenation reaction of the unsaturated polymer is carried out in solution in an inert solvent. The term "inert solvent" signifies an organic solvent that does not react with any of the reactants participating in the reaction. Examples of inert solvents whose use is recommended within the framework of the invention are aliphatic and cycloaliphatic hydrocarbons such as n-hexane, n-octane, isooctane, cyclohexane, methylcyclopentane, ethers such as tetrahydrofuran, aromatic hydrocarbons such as benzene, toluene, xylenes, etc., which are not hydrogenated under the reaction conditions selected, and mixtures of these compounds.

The reaction may be carried out in stirred-tank reactors or in loop-reactors in which the liquid mixture to be hydrogenated is extracted from the reactor proper and circulated by means of a pump through a heat exchanger and reintroduced in the reactor where it is contacted with hydrogen. The reaction may be carried out in a continuous or batch-type operation. The catalyst of this invention may be added to the reaction medium as such, or in the form of a solution in an inert organic solvent of the above-mentioned type.

The amount of catalyst to be used is not critical and may vary within broad limits; it should be comprised between 0.001 and 10 millimoles per 100 g of substance to be hydrogenated, and preferably between 0.01 and 5 mmoles per 100 g of substance to be hydrogenated. Above 10 mmoles per 100 g of substance to be hydrogenated the hydrogenation is effective but uneconomical, and may require a step for the separation of the catalyst residues. In the hydrogenation of living polymers which contain active lithium in the polymer chain, the molar ratio of active lithium to titanium in the catalyst should be equal to or less than 25, because the lithium acts as a reducing agent and affects the activity of the catalyst; the molar Li/Ti ratio should preferably be equal to or less than 15.

The active lithium in the living polymer varies as a function of the molecular weight of the polymer, the functionality of the organolithium compound used as catalyst for the preparation of the polymer, and the percentage of deactivation and coupling of the active lithium. With a view to obtaining the desired molar ratio of active lithium to titanium, said ratio may be adjusted by deactivating part of the active lithium of the polymer through the addition of water, alcohol or halogen.

To achieve the selective hydrogenation of the double bonds of the copolymers of conjugated dienes with vinylaromatic compounds, reaction temperatures of between approximately 20 and 150°C, preferably between 50 and 100°C, and hydrogen pressures of between approximately 1 and 70 kg/cm², preferably between 4 and 12 kg/cm², should be used.

The hydrogenation catalysts in accordance with the invention make it possible to hydrogenate the olefinic double bonds to a substantial extent (more than 90%), and because of their high selectivity, they do not appreciably hydrogenate the aromatic nuclei (less than 1%). In certain cases it may be desirable to effect a partial hydrogenation of the double bonds, particularly in the case of polymers and copolymers. This can be readily achieved within the framework of the present invention by choosing suitable reaction conditions: type and concentration of catalyst, temperature, hydrogen pressure, reaction time, etc. The partially hydrogenated conjugated diene polymers may have important applications as compatibilizers in polymer mixtures, as additives for improving the processability of rubbers, and as additives for improving the freezing point of lubricating oils.

The hydrogenation catalysts forming the subject of the present invention are generally of sufficient activity by themselves and usually do not require the presence of other compounds. Nevertheless in some cases it may be advantageous -- for increasing the activity and/or selectivity of the reaction -- to reduce them before or during the course of the reaction with reducing organometallic compounds such as organolithium, organomagnesium or organoaluminum compounds. Examples of the aforementioned organolithium compounds are n-butyllithium, sec.-butyllithium, etc.; of the organomagnesium compounds: dibutylmagnesium, butyloctylmagnesium, etc.; and of the organoaluminum compounds: tri-isobutylaluminum, triethylaluminum, etc.

The products of hydrogenation may be readily separated from the solvent used by means of known processes such as distillation, precipitation, etc. In particular, the partially or completely hydrogenated polymers and copolymers may be separated from the solvent by various methods:
(1) By contacting the hydrogenated solution with a polar solvent such as acetone, methanol and the like, which, by being a poor solvent of the polymer, causes the latter's precipitation and permits its physical separation.
(2) By contacting the hydrogenated solution with water and steam and eliminating the solvent by evaporation, separating the water and drying the polymer.
(3) By direct evaporation of the solvent.

As indicated above, the amount of catalyst used within the framework of the present invention can be very small, and in view of the fact that the catalyst itself and its decomposition products are not corrosive and do not impart undesirable characteristics to the polymers, costly purification processes of the polymers to eliminate the catalytic residues are generally unnecessary.

Included below are a few explanatory examples of the process of the invention, without implying any limitation of said invention.

### EXAMPLE 1

### Preparation of the catalyst bis-(4-methoxyphenyl)-bis-(η⁵-cyclopentadienyl)titanium

In a 250-ml Schlenk tube is placed, in an argon atmosphere, 25 mmoles of 4-iodoanisole (4-iodomethoxybenzene), which is dissolved in dry ethyl ether. The solution is cooled to -78°C in a bath of dry ice-acetone, and 25 mmoles of a 15% solution of n-butyllithium in hexane is added while stirring continuously. After a half hour of reaction the mixture is allowed to warm to room temperature, after which the yellowish solution of the lithium-containing compound is added, in an argon atmosphere, to a suspension of 12.5 mmoles of Cp₂TiCl₂ in ethyl ether cooled to 0°C. The mixture is allowed to warm to room temperature and after 2 hours the reaction mixture is filtered and the solvent eliminated in vacuo. The solid obtained in this manner is washed with petroleum ether, obtaining a red solid (yield = 90%) which is identified as Cp₂Ti(4-CH₃OPh)₂ by ¹H-NMR analysis [(δ: 3.62 (s, 6H, OCH₃) and δ: 6.07, s, 10 H, Cp)].

### EXAMPLE 2

### Preparation of the catalyst bis-(diphenylphosphinomethylene)-bis-(η⁵-cyclopentadienyl)titanium

In a 250-ml Schlenk tube containing 25 mmoles of LiCH₂PPh₂ x TMEDA (Inorg. Chem. 20, 3206 (1981) are added, in an argon atmosphere and at -78°C, 12 mmoles of Cp₂TiCl₂ and 100 ml of dry toluene cooled to -78°C. After 30 minutes of reaction the mixture is allowed to warm slowly to room temperature, the stirring is continued for an additional 2 hours, after which the LiCl formed is separated by filtration and the solvent eliminated in vacuo. The resulting solid is washed twice with cold hexane, obtaining an orange-colored solid which is identified by ¹H-NMR analysis as Cp₂Ti(CH₂PPh₂)₂ [δ: 1.65 (d, 4H, ²I_{P-H} = 3.5 Hz) and δ: 5.88 (s, 10H, Cp)].

### Hydrogenation of polymers

### EXAMPLE 3

The hydrogenations of the polymers were carried out in an autoclave of 2 L internal capacity, with steel container, provided with a temperature control system, variable agitation and hydrogen flow meter, as well as with means for the passage of nitrogen and hydrogen, vent and polymer discharge. Subjected to hydrogenation is a block copolymer SBₘᵥ (styrene-butadiene medium vinyl) prepared by sequential addition of monomers, using THF (tetrahydrofuran) as polar modifier, whose composition by weight is: styrene (52.8%) and butadiene (47.2%) (vinyl content of the polybutadiene: 45.6%), with M.W. = 75,000 and its polydispersity index = 1.2.

22.5 g of said polymer dissolved in 1450 mL of cyclohexane is charged into the autoclave, followed by degassing and purging several times with hydrogen. The solution is heated, and upon reaching 83°C there is added 0.90 mmole of bis-(4-methoxyphenyl)-bis-(cyclopentadienyl)titanium as catalyst dissolved in cyclohexane, whose preparation is described in Example 1. Pressurization with hydrogen is applied and a hydrogen pressure of 6 kg/cm² and a temperature of 85°C are kept constant during the entire reaction. Absorption of hydrogen is observed from the moment that pressurization is applied. After 120 minutes the reaction mixture ceases to consume hydrogen, and the reaction is considered terminated. The reactor is cooled, depressurized and the resulting solution is poured on a steam-water mixture, whereby a polymer precipitates which is then dried in an oven. Its microstructure is analyzed by ¹H-NMR, which indicates that it contains 91% of hydrogenated polybutadiene units, and the molecular weight determined by GPC (gel permeation chromatography) indicates no degradation of the polymer.

### EXAMPLE 4

Using the same hydrogenation process as in Example 3, the catalyst employed in this case was the titanium compound Cp₂Ti(CH₂PPh₂)₂. The reactor is charged with 22.5 g of the polymer described in Example 3, dissolved in 1450 mL of cyclohexane. After attaining a temperature of 68°C there is added 0.67 mmole of CpCpTi(CH₂PPh₂)₂ dissolved in cyclohexane. Pressurization with hydrogen is applied and a pressure of 6 kg/cm² and a temperature of 70°C are kept constant during the entire reaction. A strong absorption of hydrogen is noted. After 15 minutes the consumption of hydrogen ceases, the reaction is considered terminated, the reactor is cooled, depressurized, and the resulting solution is poured on a steam-water mixture, whereby the polymer precipitates. The isolated polymer contains 100% of hydrogenated 1,2-polybutadiene units, and 67.5% of the 1,4 units. Hydrogenation of the polystyrene is not observed, nor is any degradation of the polymer noted.

### EXAMPLE 5

The following example relates to the hydrogenation of a living polymer which contains active lithium at the end of the polymer chain. 213 g of cyclohexane, 11 g of styrene, 0.033 g of n-butyllithium and an amount of tetramethylethylenediamine (TMEDA) corresponding to 0.8 mole per mole of n-butyllithium are placed in the autoclave. The resulting mixture is subjected to polymerization for 30 minutes at 70°C, after which 22 g of 1,3-butadiene is added which is allowed to polymerize for an additional 25 minutes, thereby obtaining a living styrene-butadiene copolymer containing 1.57 mmoles of lithium per 100 g of polymer. A portion of the polymner is isolated and subjected to analysis, which shows that it contains 34.0% by weight of styrene, 36.6% 1,2-polybutadiene units (based on the total weight of the polymer) and has a number-averaged molecular weight of approximately 64,000. After the polymerization reaction is completed the amount of active lithium is adjusted by means of BHT (2,6-di-tert.-butyl-4-methylphenol) to 0.78 mmole of Li per 100 g of polymer, and this polymer is diluted with cyclohexane to a concentration of 3% by weight.

The reactor is purged several times with hydrogen and, after heating to 90°C, 0.07 mmole of Cp₂Ti(4-CH₃OPh)₂ dissolved in toluene is added; the reactor is then pressurized with hydrogen at 6 kg/cm². The hydrogenation is allowed to proceed for 2 hours at 90°C with stirring. The hydrogen consumption takes place essentially during the first hour.

When the reaction is terminated the reactor is depressurized and cooled, and the polymer solution is discharged; the polymer is isolated as described in Example 3. The resulting polymer contains 98.7% of hydrogenated polybutadiene units; no hydrogenation of the styrene units nor modification of the original molecular weight distribution is observed.

### EXAMPLE 6

In this case a living styrene-butadiene-styrene block copolymer is synthetized in a manner analogous to that of Example 5. Thus 5.1 g of styrene is polymerized for 20 minutes with 0.033 g of n-butyllithium and an amount of tetrahydrofuran corresponding to 40 moles per mole of n-butyllithium; thereupon 25.2 g of butadiene is added which is polymerized for 25 minutes; and finally another 5.1 g of styrene is added which is polymerized for an addtional 20 minutes. In this way a living styrene-butadiene-styrene polymer is obtained containing 1.46 mmoles of lithium per 100 g of polymer, a portion of which is isolated for analysis, which shows that it contains 30% by weight of styrene, 30% vinylic polybutadiene units based on the total weight of the polymer, and has a number-averaged molecular weight of about 68,000. After the polymerization is completed half of the polymer chains are deactivated by adding BHT (2,6-di-tert.-butyl-4-methylphenol), and the polymer is diluted with cyclohexane to a content of 3% by weight.

Using the same hydrogenation process as in Example 5 there is added to the reactor 0.07 mmol of Cp₂Ti(4-CH₃OPh)₂, and the reaction is maintained at 90°C at a hydrogen pressure of 6 kg/cm² for 2 hours, with the major amount of hydrogen consumed during the first hour.

Analysis of the polymer resulting from this reaction indicates that it contains 97.1% of hydrogenated polybutadiene, but no hydrogenation of the styrene ring nor degradation of the polymer molecules is observed.

### EXAMPLE 7

Using the same process as described in Example 5, 11 g of styrene and 22 g of 1,3-butadiene are sequentially polymerized, employing 0.033 g of n-butyllithium as initiator but without using any polar modifier in this case. Analysis of part of the polymer isolated for this purpose indicates a styrene content of 32.7% by weight and a vinyl fraction of 6.9% based on the total weight of the polymer, with a number-averaged molecular weight of about 64,000.

The hydrogenation reaction is carried out during two hours under the same conditions of temperature, pressure, molar Li/Ti ratio and amount and type of catalyst as in Example 5. The hydrogen consumption is substantially completed during the first hour. Analysis of the polymer thus obtained shows that 95.4% of the polybutadiene units are hydrogenated, without noting any hydrogenation of the styrene fraction or degradation of the polymer.

### EXAMPLE 8

In a manner similar to Example 5, a living polybutadiene is prepared by polymerizing 37.8 g of butadiene with 0.038 g of n-butyllithium and an amount of tetrahydrofuran corresponding to a molar THF/Li ratio of 35, in 266 g of cyclohexane, for 25 minutes at 70°C. Analysis of the polymer sample taken for this purpose shows a vinylic polybutadiene content of 42.4% and a number-averaged molecular weight of about 63,000.

The amount of active Li is reduced by adding 2,6-di-tert.-butyl-4-methylphenol to a concentration of 0.8 mmole of Li per 100 g of polymer, followed by dilution with cyclohexane to 3.3% by weight; and the hydrogenation is then carried out for 2 hours at 85°C and a pressure of 6 kg/cm² in accordance with the procedure described in Example 5, using 0.07 mmole of Cp₂Ti(4-CH₃OPh)₂.

The resulting polymer is hydrogenated to an extent of 93.2%, without noting any degradation of the polymer.

### EXAMPLE 9

Using the same polymerization process as in Example 6, a living styrene-butadiene-styrene copolymer is synthetized containing 30.5% by weight of styrene and 28.9% of vinylic fraction relative to the total weight of the polymer, having a number-averaged molecular weight of approximately 71,400 and an active Li content of 1.46 mmoles per 100 g of polymer.

Using the process described in Example 5, except that in this case the amount of Li is not reduced by the addition of BHT (2,6-di-tert.-butyl-4-methylphenol), this polymer, previously diluted with cyclohexane to a concentration of 10%, is hydrogenated. The reaction is carried out with the use of 0.3 mmole of Cp₂Ti(4-CH₃OPh)₂ (Li/Ti = 5.7) at 90°C and a hydrogen pressure of 6 kg/cm², during 2 hours, with the consumption of hydrogen essentially completed during the first hour. Analysis of the resulting polymer shows 98.2% hydrogenation of the butadiene fraction, without hydrogenation of the styrene part nor any degradation of the polymer.

Table I summarizes the results of the hydrogenations carried out in Examples 5 to 9, using Cp₂Ti(4-CH₃OPh)₂ as catalyst.

**TABLE 1**

| Example | Polymer | mmole of Ti/100 g of polymer | Li/Ti | % hydrog. |
|---|---|---|---|---|
| 5 | SBₘᵥ | 0.2 | 3.9 | 98.2 |
| 6 | SBₘᵥS | 0.21 | 3.6 | 97.1 |
| 7 | SB | 0.20 | 3.9 | 95.4 |
| 8 | PB | 0.20 | 4.0 | 93.2 |
| 9 | SBₘᵥS | 0.24 | 5.7 | 98.2 |

### EXAMPLE 10

Using the procedure described in Example 5, a living styrene-butadiene copolymer containing 1.38 mmoles of Li per 100 g of polymer is synthetized. A portion of this polymer is isolated for analysis, which shows that it contains 34.5% by weight of styrene, has a vinyl content of 27.45% based on the total weight of polymer, and has a number-averaged molecular weight of about 72,000.

The polymner is diluted with cyclohexane to a concentration of 3% by weight, and subjected to hydrogenation according to the procedure described in Example 5 but without chain deactivation, and by using, as catalyst, a toluene solution of Cp₂Ti(CH₂PPh₂)₂ in an amount of 0.4 mmole of catalyst per 100 g of polymer. The hydrogenation reaction is maintained for 2 hours at 80°C and at a hydrogen pressure of 6 kg/cm₂. The hydrogen consumption is essentially completed during the first hour.

The resulting polymer is isolated and analyzed, finding that 90.94% of the butadiene units have been hydrogenated, but that no hydrogenation of the styrene fraction nor degradation of the polymer has occurred.

### EXAMPLE 11

The following example shows the stability, in solution, of the catalysts forming the subject of the present invention. To demonstrate this, a living styrene-butadiene copolymer is synthetized by the procedure described in the preceding examples, through sequential polymerization of 32.1 g of styrene and 64.6 g of butadiene, using, as initiator, 0.085 g of n-butyllithium and adding tetrahydrofuran in a proportion of 40 moles per mole of n-butyllithium. A portion of the polymer is isolated for analysis, which shows that it contains 34.2% by weight of styrene, 25.8% of vinyl units based on the total weight of the polymer, and has a number-averaged molecular weight of approximately 73,000.

The polymer synthetized in this manner contains 1.38 mmoles of active Li per 100 g of polymer, an amount that is reduced by the addition of 2,6-di-tert.-butyl-4-methylphenol to a content of 0.69 mmole of Li per 100 g of polymer, and it is diluted with cyclohexane to a concentration of 8% by weight. Hydrogenation of this polymer is carried out by the method described in Example 5, using for catalyst a toluene solution of Cp₂Ti(4-CH₃OPh)₂ that has been stored in an argon atmosphere for 50 days, and which is added in an amount of 0.2 mmole of catalyst per 100 g of polymer.

The reaction is allowed to proceed for 2 hours at 85°C and 6 kg/cm² hydrogen pressure, after which the polymer is isolated and analyzed, finding that 98.1% of the butadiene units of the original polymer are hydrogenated, and that neither hydrogenation of the styrenic fraction nor degradation of the polymer has taken place, which indicates that both the activity and selectivity of the catalyst remain unchanged when the catalyst is stored in solution form.

### EXAMPLE 12

In the following example it may be observed that these catalysts are active even for polymers of high molecular weights with low Li/Ti molar ratios. Thus, analogously to Example 5, there are introduced into the autoclave 296 g of cyclohexane, 5.2 g of styrene, 0.013 g of n-butyllithium and tetrahydrofuran in a proportion of 35 moles per mole of n-butyllithium. The mixture is allowed to polymerize for 20 hours, then 23.6 g of butadiene is added, which is left to polymerize for 25 minutes, and finally 5.2 g of styrene is added which is allowed to polymerize for an additional 20 minutes. In this way a living styrene-butadiene-styrene copolymer is obtained, which contains 0.6 mmole of Li per 100 g of polymer, and which is diluted with cyclohexane to a concentration of 3% by weight.

A portion of the polymer is isolated and subjected to analysis which shows that it contains 31.6% of styrene by weight, a vinyl fraction of 20.8% based on the total weight of the polymer, and has a number-averaged molecular weight of about 160,000.

The living polymer is subjected to hydrogenation without prior deactivation of the chains, the Li/Ti ratio being 2.4, using 0.085 mmole of Cp₂Ti(p-CH₃OPh)₂ for 100 minutes, the procedure and operating conditions being the same as in Example 5. The consumption of hydrogen is essentially completed during the first 60 minutes.

Analysis of the polymer obtained in this manner shows 86.0% of the butadiene fraction hydrogenated, without hydrogenation of the styrene or degradation of the polymer.

## Claims

1. Process of hydrogenation in solution of the double bonds of polymers of conjugated dienes, characterized by using homogeneous catalysts of the general formula
Cp₂Ti(PhOR)₂
wherein Cp = η⁵ -cyclopentadienyl: C₅H₅, Ph is a phenyl group and OR an alkoxide group containing between 1 and 4 carbon atoms; or homogeneous catalysts of the type
Cp₂TiR₂
wherein R is a -CH₂PPh₂ group.

2. Process of hydrogenation of polymers according to Claim 1, wherein the hydrogenation catalyst is the compound bis-(4-methoxyphenyl)-bis-(η⁵-cyclopentadienyl)titanium.

3. Process of hydrogenation of polymers according to Claim 1, characterized in that the catalysts described are active by themselves and usually do not require the presence of reducing compounds.

4. Process of hydrogenation in solution of the double bonds of diene polymers or diene copolymers with vinylaromatic hydrocarbons according to Claim 1, characterized in that the number-averaged molecular weights of the polymers are comprised between approximately 500 and 1,000,000.

5. Hydrogenation process according to Claim 1 characterized in that the hydrogenation reaction is carried out in solution is an inert solvent which is an aliphatic or cycloaliphatic hydrocarbon, an ether or an aromatic hydrocarbon.

6. Hydrogenation process according to Claim 5, wherein the solvent is n-hexane, n-octane, isooctane, cyclohexane, methylcyclopentane, tetrahydrofuran, benzene, toluene, a xylene, or mixtures of these compounds.

7. Hydrogenation process according to Claim 4 wherein the polymer or copolymer is a living polymer or copolymer which contains active lithium in the chain of the polymer or copolymer obtained by polymerization with a lithium catalyst.

8. Hydrogenation process according to Claim 7, wherein, prior to the hydrogenation, the molar ratio of active lithium to titanium in the living polymer or copolymer must be equal to or less than 15.

9. Hydrogenation process in accordance with Claim 1 characterized in that the hydrogenation is carried out at temperatures between 50 and 100°C and at hydrogen pressures between 4 and 12 kg/cm².

10. Process according to Claim 1 characterized by using catalyst amounts of between 0.01 and 5 millimoles per 100 g of substance to be hydrogenated.

11. Process according to Claim 4 characterized in that the copolymer consists mainly of a) 1,3-butadiene and/or isoprene and b) styrene.

12. Process according to claim 11 characterized in that the copolymer is a random copolymer or a pure or gradual block copolymer of styrene and butadiene or isoprene.

13. Process according to claim 11, characterized in that the copolymer is a block copolymer containing at least one polymer block A consisting of styrene and at least one polymer block B consisting mainly of 1,3-butadiene and/or isoprene, the content of block A in the copolymer being 10-90% by weight and the content of 1,2-vinyl units in block B being 25 to 75%.

14. Process according to claim 12, characterized in that more than 90% of the 1,3-butadiene and/or isoprene units and less than 1% of the styrene units are hydrogenated.

## Patentansprüche

1. Ein Verfahren zur Hydrierung in Lösung der Doppelbindungen von Polymeren konjugierter Diene, gekennzeichnet durch die Verwendung von homogenen Katalysatoren der allgemeinen Formel
CP₂Ti(PhOR)₂
in der Cp = η⁵-Cyclopentadienyl, C₅H₅, Ph eine Phenylgruppe und OR eine Alkoxydgruppe mit 1 bis 4 Kohlenstoffatomen bedeutet; oder eines Katalysators vom Typ
Cp₂TiR₂
in dem R eine -CH₂PPh₂-Gruppe bedeutet.

2. Ein Verfahren zur Hydrierung von Polymeren nach Anspruch 1, bei dem der Katalysator für die Hydrierung die Verbindung bis-(4-Metoxyphenyl)-bis-(η⁵-Cyclopentadienyl) titan ist.

3. Ein Verfahren zur Hydrierung von Polymeren nach Anspruch 1, dadurch gekennzeichnet, dass die genannten Katalysatoren eigenaktiv sind und normalerweise nicht die Anwesenheit von Reduktionsverbindungen benötigen.

4. Ein Verfahren zur Hydrierung in Lösung der Doppelbindungen der Dien-Polymeren oder -Copolymeren mit vinylaromatischen Kohlenwassterstoffen, nach Anspruch 1, dadurch gekennzeichnet, dass die mittleren Molekulargewichte der Polymere zwischen etwa 500 und 1.000.000 liegen.

5. Ein Verfahren zur Hydrierung nach Anspruch 1, dadurch gekennzeichnet, dass die Reaktion der Hydrierung in einem inerten Lösungsmittel aufgelöst durchgeführt wird, welches ein alifatischer oder cycloalifatischer Kohlenwassterstoff, ein Ether oder ein aromatischer Kohlenwasserstoff ist.

6. Ein Verfahren zur Hydrierung nach Anspruch 5, bei dem das Lösungsmittel n-Hexan, n-Oktan, Isooktan, Cyclooktan, Methylcyclopentan, Tetrahydrofuran, Benzol, Toluol, ein Xylol oder Mischungen dieser Verbindungen ist.

7. Ein Verfahren zur Hydrierung nach Anspruch 4, bei dem das Polymer oder Copolymer ein lebendes Polymer oder Copolymer ist, das ein durch Polymerisation mit einem Lithiumkatalisator erhaltenes aktives Lithium in der Polymer- oder Copolymerkette enthält.

8. Ein Verfahren zur Hydrierung nach Anspruch 7, bei dem vor der Hydrierung das Molverhältnis vom aktiven Lithium zum Titan in dem Polymer oder Copolymer gleich oder kleiner als 15 sein soll.

9. Ein Verfahren zur Hydrierung von Polymeren nach Anspruch 1, dadurch gekennzeichnet, dass die Hydrierung bei Temperaturen von 50°C bis 100°C und bei Wasserstoffdrücken von 4 bis 12 kg/cm² durchgeführt wird.

10. Ein Verfahren nach Anspruch 1, dadurch gekennzeichnet dass der Katalysator in Mengen von 0,01 bis 5 Millimol je 100 g der zur hydrierenden Substanz verwendet wird.

11. Ein Verfahren nach Anspruch 4, dadurch gekennzeichnet dass das Copolymer hauptsächlich aus a) 1,3-Butadien und/oder Isopren und b) Styrol besteht.

12. Ein Verfahren nach Anspruch 11, dadurch gekennzeichnet dass das Copolymer ein aleatorisches Copolymer oder ein reines Copolymer oder ein Copolymer aus einstellbaren Styrol-, Butadien- oder Isoprenblöcken ist.

13. Ein Verfahren nach Anspruch 11, dadurch gekennzeichnet dass das Copolymer ein Blockcopolymer ist, das wenigstens einen aus Styrol bestehenden Polymerblock A und wenigsten einen hauptsächlich aus 1,3-Butadien und/oder aus Isopren bestehenden Polymerblock B enthält, wobei der Gehalt an Block A im Copolymer 10% bis 90 Gew.% und der Gehalt an 1,2-Vinyl-Einheiten im Block B 25% bis 75% beträgt.

14. Ein Verfahren nach Anspruch 12, dadurch gekennzeichnet dass mehr als 90% der 1,3-Butadien- und/oder Isopren-Einheiten und weniger als 1% der Styroleinheiten hydriert sind.

## Revendications

1. Une procédure d'hydrogénation en solution des doubles liaisons des polymères à diènes conjugués, se caractérisant en ce que l'utilisation de catalyseurs homogènes dont la formule générale est
Cp₂Ti (PhOR)₂
où Cp = η⁵ -cyclopentadiényle, C₅H₅, Ph est un groupe phényle et OR est un groupe alcoxyde qui contient de 1 à 4 atomes de carbone; ou un catalyseur homogène du type
Cp₂TiR₂
où le groupe R est un groupe -CH₂PPh₂.

2. Une procédure d'hydrogénation de polymères selon la revendication 1, dans laquelle le catalyseur de l'hydrogénation est le composé bis-(4-méthoxyphényle)-bis-(η⁵-cyclopentadiényle) titane.

3. Une procédure d'hydrogénation de polymères selon la revendication 1, se caractérisant en ce que les catalyseurs décrits sont activés par eux-mêmes et n'ont pas besoin en général de composés réducteurs.

4. Une procédure d'hydrogénation en solution des doubles liaisons des polymères diènes ou copolymères diènes à hydrocarbures vinylaromatiques selon la revendication 1, se caractérisant en ce que les poids moléculaires moyens des polymères sont compris entre 500 et 1.000.000 environ.

5. Une procédure d'hydrogénation selon la revendication 1, se caractérisant en ce que la réaction d'hydrogénation se fait en dissolution dans un solvant inerte qui est un hydrocarbure aliphatique ou cyclo-aliphatique, un éther ou un hydrocarbure aromatique.

6. Une procédure d'hydrogénation selon la revendication 5, dans laquelle le solvant est n-hexane, n-octane, octane iso, cyclohexane, méthylcyclopentane, tétrahydrofurane, benzène, toluène, un xylène ou les mélanges de ces composés.

7. Une procédure d'hydrogénation selon la revendication 4, dans laquelle le polymère ou le copolymère est un polymère ou un copolymère vivant contenant du lithium actif dans la chaîne du polymère ou du copolymère obtenu par polymérisation avec un catalyseur au lithium.

8. Une procédure d'hydrogénation selon la revendication 7, dans laquelle, avant l'hydrogénation, la relation molaire du lithium actif au titane dans le polymère ou le copolymère vivant doit être égale ou inférieure à 15.

9. Une procédure d'hydrogénation selon la revendication 1, se caractérisant en ce que l'hydrogénation se réalise à des températures entre 50°C et 100°C, et à des pressions d'hydrogène de 4 à 12 kg/cm².

10. Une procédure selon la revendication 1, se caractérisant en ce que l'utilisation de quantités de catalyseur est de 0,01 à 5 millimoles pour 100 g de substance à hydrogéner.

11. Une procédure selon la revendication 4, se caractérisant en ce que le copolymère consiste principalement en a) 1,3-butadiène et/ou isoprène et b) styrène.

12. Une procédure selon la revendication 11, se caractérisant en ce que le copolymère est un copolymère aléatoire ou un copolymère pur ou à blocs graduels de styrène et butadiène ou isoprène.

13. Une procédure selon la revendication 11, se caractérisant en ce que le copolymère est un copolymère à blocs qui contient au moins un bloc polymérique A consistant en stirène et au moins un bloc polymérique B consistant principalement en 1,3-butadiène et/ou isoprène, le contenu du bloc A en copolymère étant de 10% à 90% en poids, et la teneur d'unités 1,2-vinyle dans le bloc B étant de 25% à 75%.

14. Une procédure selon la revendication 12, se caractérisant en ce que plus de 90% des unités 1,3-butadiène et/ou isoprène et moins de 1% des unités d'stirène sont hydrogénées.
